## Europäisches Patentamt
## European Patent Office
## Office européen des brevets

(11) Veröffentlichungsnummer: **0 262 566 B1**

# EUROPÄISCHE PATENTSCHRIFT

(45) Veröffentlichungstag der Patentschrift: **23.10.91**

(51) Int. Cl.⁵: **C08L 69/00, B29C 33/62**

(21) Anmeldenummer: **87113872.3**

(22) Anmeldetag: **23.09.87**

Die Akte enthält technische Angaben, die nach dem Eingang der Anmeldung eingereicht wurden und die nicht in dieser Patentschrift enthalten sind.

(54) **Verwendung von oxydiertem Polyethylen als Entformungsmittel.**

(30) Priorität: 03.10.86 DE 3633709
14.02.87 DE 3704666

(43) Veröffentlichungstag der Anmeldung:
06.04.88 Patentblatt 88/14

(45) Bekanntmachung des Hinweises auf die Patenterteilung:
23.10.91 Patentblatt 91/43

(84) Benannte Vertragsstaaten:
**DE FR GB IT NL**

(56) Entgegenhaltungen:
AT-B- 236 652
DE-B- 1 109 884
DE-B- 1 170 141
DE-B- 1 266 974
US-A- 4 313 873

Patent Abstracts of Japan, unexamined applications, Field C, Band 7, Nr. 147, 28. Juni 1983 - THE PATENT OFFICE JAPANESE GOVERNMENT, Seite 70 C 173

(73) Patentinhaber: **BAYER AG**

**W-5090 Leverkusen 1 Bayerwerk(DE)**

(72) Erfinder: **Kircher, Klaus, Dr.**
**Alfred-Kubin-Strasse 3**
**W-5090 Leverkusen(DE)**
Erfinder: **Berg, Klaus, Dr.**
**Hansastrasse 124**
**W-4150 Krefeld(DE)**
Erfinder: **Savage, Ross**
**111 East Street Newtownards**
**County Down, BP23 3DE**
**Northern-Ireland(GB)**
Erfinder: **Meier, Helmut-Martin, Dr.**
**Am Obersthof 3**
**W-4030 Ratingen-Eggerscheidt(DE)**

**Beschreibung**

Gegenstand der vorliegenden Erfindung ist die Verwendung von oxydiertem Polyethylen mit einem Molekulargewicht $\overline{M}n$ (Zahlenmittel, ermittelt durch Gelpermeationschromatographie) zwischen 9000 und 15 000, vorzugsweise zwischen 9000 und 14 000, in Mengen von 0,05 bis 3 Gew.-%, vorzugsweise in Mengen von 0,08 bis 1,0 Gew.-% und insbesondere in Mengen von 0,1 bis 0,8 Gew.-%, bezogen jeweils auf Gesamtgewicht an Thermoplasten, als Entformungsmittel für estergruppenfreie, thermoplastische, aromatische Polycarbonate, die gegebenenfalls noch andere Thermoplasten, gegebenenfalls vorzugsweise thermoplastische Polyolefine, thermoplastische Polyalkylenterephthalate, thermoplastische ABS-Polymerisate oder thermoplastische SAN-Polymerisate enthalten.

Die Spritzgußverarbeitung (zusammenfassende Darstellung siehe beispielsweise Ullmanns Encyclopädie der technischen Chemie, 4. Auflage, Band 19, Seiten 55 bis 59, insbesondere Seite 58).

stellt ein probates Mittel für die Fertigung verschiedener Artikel aus thermoplastischen Formmassen dar. Um dem Hergang des Spritzgießens in einer ökonomisch vertretbaren Weise ablaufen lasen zu können, ist es erforderlich, die Adhäsion des Formteils an der Werkzeugwand durch Einsatz eines Entformungsmittels zu minimieren. Es ist weiterhin sehr vorteilhaft, das Entformungsmittel in die thermoplastische Formmasse einzuarbeiten, was jedoch bedingt, daß die Eigenschaften der Formmassen, gemessen unter normalen Bedingungen und Verarbeitungstemperaturen, durch das Entformungsagens nicht wesentlich beeinflußt werden.

Auch für eine thermoplastische Formmasse aus Polycarbonat sind Entformungsmittel sehr oft von großem Nutzen. Allerdings stellt Polycarbonat wegen seiner hohen Verarbeitungstemperaturen ($\geqq 250\,^\circ$C) und der unter diesen Bedingungen großen Empfindlichkeit der Carbonat-Bindung gegenüber Hydrolyse, Verseifung und Umesterung erhöhte Anforderungen an das einzuarbeitende Entformungsagens.

Aus der EP-OS 0 007 437 bzw. US-PS 4 313 873 ist bekannt, oxydiertes Polyethylen zu Polycarbonaten oder ABS-Polymerisaten zuzusetzen, um die Herstellung von Treibmittelkonzentraten zu ermöglichen. Das oxydierte Polyethylen wird hierbei als Verarbeitungsmittel, jedoch nicht als Entformungsmittel eingesetzt. (Siehe beispielsweise die Beispiele dieser Patentschriften).

In der japanischen Anmeldung 57/140 538 (offengelegt als Nr. 58-29255) wird die Verwendung von oxydiertem Polyethylen mit einem Molekulargewicht $\overline{M}n$ von 1.500 bis 5.000 als Formtrennmittel für Polyestercarbonate beansprucht. Bei der Übertragung auf estergruppenfreie, thermoplastische Polycarbonate stellt man jedoch ein sehr starkes Absinken des mechanischen Polycarbonat-Eigenschaftsniveaus fest.

Aus den DE-OS 2 701 725 und 2 708 467 sowie der JA 47/41092 sind Fettsäureteilester von Alkoholen bzw. Phenolen - also Verbindungen mit freien Hydroxylgruppen -als Polycarbonat-Entformungsmittel bekannt. Auch Carbonsäuren sind zu diesem Zweck in Polycarbonat eingesetzt worden (US-Patente Nr. 4 409 351 und Nr. 4 408 000). Beide Substanzklassen besitzen als Polycarbonat-Entformungsmittel allerdings einen gravierenden Nachteil: sie setzen die thermische Langzeitstabilität des Thermoplasten deutlich herab.

Als estergruppenfreie, aromatische Polycarbonate kommen die durch Umsetzung von Diphenolen, insbesondere von Dihydroxydiarylalkanen, mit Phosgen oder Diestern der Kohlensäure erhältlichen Polykondensate in Betracht, wobei außer den unsubstituierten Dihydroxydiarylalkanen auch solche geeignet sind, deren Arylreste in o-und/oder m-Stellung zur Hydroxylgruppe Methylgruppen oder Halogenatome tragen. Ebenso sind verzweigte Polycarbonate geeignet.

Die estergruppenfreien, aromatischen Polycarbonate haben mittlere Gewichtsmittel-Molekulargewichte $\overline{M}n$ zwischen 10.000 und 100.000, vorzugsweise zwischen 15.000 und 40.000, ermittelt durch Messungen der rel. Viskosität in $CH_2Cl_2$ bei 25$\,^\circ$C.

Geeignete Diphenole sind z.B. Hydrochinon, Resorcin, 4,4'-Dihydroxydiphenyl, Bis-(hydroxy-phenyl)-alkane wie beispielsweise $C_1$-$C_8$-Alkylen- bzw. $C_2$-$C_8$-Alkylidenbisphenole, Bis-(hydroxy-phenyl)-cycloalkane wie beispielsweise $C_5$-$C_{15}$-Cycloalkylen- bzw. $C_5$-$C_{15}$-Cycloalkylidenbisphenole, Bis-(hydroxy-phenyl)-sulfide, -ether, -ketone, -sulfoxide oder -sulfone. Ferner $\alpha,\alpha'$-Bis-(hydroxy-phenyl)-diisopropylbenzol sowie die entsprechenden kernalkylierten bzw. kernhalogenierten Verbindungen. Bevorzugt sind Polycarbonate auf Basis Bis-(4-hydroxy-phenyl)-propan-2,2 (Bisphenol A), Bis-(4-hydroxy-3,5-dichlor-phenyl)-propan-2,2 (Tetrachlorbisphenol A), Bis-(4-hydroxy-3,5-dibrom-phenyl)-propan-2,2(Tetrabrombisphenol A), Bis-(4-hydroxy-3,5-dimethyl-phenyl)-propan-2,2 (Tetramethylbisphenol A), Bis-(4-hydroxy-phenyl)-cyclohexan-1,1 (Bisphenol Z) sowie auf Basis von Dreikernbisphenolen wie $\alpha,\alpha'$-Bis-(4-hydroxy-phenyl)-p-diisopropylbenzol.

Weitere für die Herstellung der Polycarbonate geeignete Diphenole sind in den US-Patenten 2 970 131, 2 991 273, 2 999 835, 2 999 846, 3 028 365, 3 062 791, 3 148 172, 3 271 367 und 3 275 601 beschrieben.

Der Zusatz von anderen thermoplastischen Kunststoffen also anderen Thermoplasten erfolgt bis maximal in Mengen von 45 Gew.-%, bezogen auf die Gewichtssumme aus Polycarbonat und anderen Thermoplasten. Vorzugsweise werden maximal 30 Gew.-% zugesetzt. Es können sowohl ein als auch mehrere andere Thermoplasten zugesetzt werden.

Erfindungsgemäß mitzuverwendende thermoplastische Polyolefine sind Polymere von aliphatischen ungesättigten Kohlenwasserstoffen, wie beispielsweise Ethylen, Propylen, Butylen oder Isobutylen, die nach üblichen Verfahren z.B. Radikalpolymerisation erhalten werden und mittlere Gewichtsmittel oder Molekulargewichte $\overline{M}w$ (gemessen nach gelchromatographischen Methoden) zwischen 1000 und 3.000.000 haben. Es ist sowohl Hochdruckpolyolefin als auch Niederdruckpolyolefin brauchbar. Die ungesättigten Kohlenwasserstoffe können auch mit anderen Vinylmonomeren wie z.B. Vinylacetat in bekannter Weise copolymerisiert sein.

Erfindungsgemäß mitzuverwendende thermoplastische Polyalkylenterephthalate sind beispielsweise solche auf Basis von Ethylenglykol, Propandiol-1,3, Butandiol-1,4, Hexandiol-1,6 und 1,4-Bis-hydroxymethylcyclohexan. Die Molekulargewichte ($\overline{M}w$) dieser Polyalkylenglykolterphthalate liegen zwischen 10.000 und 80.000. Die Polyalkylenglykolterephthalate können nach bekannten Verfahren beispielsweise aus Terephthalsäuredialkylester und dem entsprechenden Diol durch Umesterung erhalten werden. Beispielsweise geht man von einem niederen Alkylester der Terephthalsäure, vorzugsweise dem Dimethylester, aus und estert diesen mit einem Überschuß an Diol in Gegenwart geeigneter Katalysatoren zum Bishydroxyalkylester der Terephthalsäure um. Dabei wird die Temperatur ausgehend von 140°C auf 210 - 220°C erhöht. Der in Freiheit gesetzte Alkohol wird abdestilliert. Die Aufkondensation erfolgt anschließend bei Temperaturen von 210 - 280°C, der Druck wird dabei stufenweise bis auf weniger als 1 Torr erniedrigt, wobei das überschüssige Diol abdestilliert wird.

Erfindungsgemß mitzuverwendende thermoplastische ABS-Polymerisate sind solche, in denen auf einen Kautschuk entweder ein Monomer aus der Reihe Styrol, Methylmethacrylat oder eine Monomermischung von 95-50 Gew.-% Styrol, α-Methylstyrol, Methylmethacrylat oder Mischungen daraus und 5-50 Gew.-% Acrylnitril, Methylmethacrylat, Maleinsäureanhydrid, N-substituierte Maleinimide oder Mischungen daraus pfropfpolymerisiert sind. Geeignete Kautschuke sind insbesondere Polybutadien, Butadien/Styrol-Copolymerisate mit bis zu 30 Gew.-% einpolymerisiertem Styrol, Copolymerisate von Butadien und Acrylnitril mit bis zu 20 Gew.-% Acrylnitril oder Copolymerisate von Butadien mit bis zu 20 Gew.-% eines niederen Alkylethers von Acryl- oder Methacrylsäure (z.B. Methylacrylat, Ethylacrylat, Methylmethacrylat und Ethylmethacrylat).

Die Pfropfmischpolymerisate enthalten 5-80 Gew.-%, insbesondere 20-70 Gew.-%, Kautschuk und 95-20 Gew.-%, insbesondere 80 bis 30 Gew.-%, pfropfcopolymerisierte Monomere. Die Kautschuke liegen in diesen Pfropfmischpolymerisaten in Form wenigstens partiell vernetzter Teilchen einer mittleren Teilchengröße von 0,09 bis 5 μm, insbesondere von 0,1 bis 1 μm, vor. Derartige Pfropfmischpolymerisate werden durch radikalische Pfropfcopolymerisation von Monomeren aus der Reihe Styrol, α-Methylstyrol, Acrylnitril, Methylmethacrylat, Maleinsäureanhydrid in Gegenwart der zu pfropfenden Kautschuke hergestellt und sind durchweg bekannt. Bevorzugte Herstellungsverfahren für solche Pfropfmischpolymerisate sind die Emulsions-, Lösungs-, Masse- oder Suspensionspolymerisation.

Erfindungsgemäß mitzuverwendende thermoplastische SAN-Polymerisate sind Copolymerisate aus 95-50 Gew.-Teilen Styrol, α-Methylstyrol, Methylmethacrylat oder Mischungen daraus und 5 bis 50 Gew.-Teilen Acrylnitril, Methacrylnitril, Methylmethacrylat oder Mischungen daraus. Unter diesen Copolymerisaten sind besonders bevorzugt Produkte aus etwa 80-60 Gew.-% Styrol, und 20 bis 40 Gew.-% Acrylnitril, sowie die analogen Copolymerisate aus α-Methylstyrol.

Das erfindungsgemäß zu verwendende oxydierte Polyethylen kann durch Luftoxydation von "High-density-" oder "Low-density"-Polyethylen in bekannter Weise hergestellt werden (siehe GB-Pat. Nr. 918 295). Die geeigneten Molekulargewichte $\overline{M}n$ (Zahlenmittel wie eingangs beschrieben ermittelt) liegen zwischen 9000 und 15.000, vorzugsweise zwischen 9000 und 14.000. Der Sauerstoffgehalt der erfindungsgemäß einzusetzenden oxydierten Polyethylene beträgt 1 Gew.-% bis 7 Gew.-%.

In den Beispielen wird ein Handelsprodukt der Hoechst AG, das TMPED 191® verwendet. Es besitzt ein Molekulargewicht $\overline{M}n$ (Zahlenmittel, ermittelt durch Gelpermeatochromatographie) von ca. 11.000, eine Säurezahl im Bereich von 10-20, eine Verseifungszahl im Bereich von 25-40 sowie einen Sauerstoffgehalt von ca. 4,5 Gew.-%. Die Verseifungszahl gibt den Gehalt an freien und durch Esterspaltung (Verseifung) entstandenen Gehalt an Carboxylgruppen an.

Das beschriebene Entformungsmittel kann mittels bekannter Extrusion in die thermoplastische Formmasse eingearbeitet werden, wobei vorzugsweise Temperaturen zwischen 250°C und 350°C eingehalten werden.

Die Mitverwendung anderer Thermoplasten kann ebenfalls in der bekannten Weise durch Extrusion bei Temperaturen zwischen 250 und 350°C erfolgen.

Die erfindungsgemäß leicht entformbaren thermoplastischen, aromatischen Polycarbonate können noch die üblichen Additive wie beispielsweise Thermo- und Hydrolysestabilisatoren, Flammschutzmittel, Anti-

3

oxydantien, Schlagzähmodifikatoren, UV-Stabilisatoren und inerte Füllstoffe in den üblichen Mengen enthalten, ohne daß die erfindungsgemäße Wirksamkeit des Zusatzes des oxydierten Polyethylens wesentlich davon beeinflußt wird.

Durch die erfindungsgemäße Verwendung des oxidierten Polyethylens lassen sich aus den thermoplastischen, aromatischen Polycarbonaten Formkörper herstellen, die auch aus dünnwandigen oder großvolumigen Teilen bestehen können. Der Einsatz derartiger Formkörper erfolgt im üblichen technischen Anwendungsbereich für thermoplastische Polycarbonate. (Siehe dazu beispielsweise Ullmanns Encyclopädie der technischen Chemie, loc. cit.).

Die entformungsfördernde Wirkung des oxidierten Polyethylens läßt sich anhand der bei der Entformung von Spritzgußmassen benötigten Entformungskräfte messen. Diese werden in den folgenden Beispielen dadurch gemessen, daß man den in dem Ölzylinder des Auswerfersystems bei der Entformung aufbauenden Druck über ein optisches und gleichzeitig schreibendes Anzeigegerät sichtbar macht.

Beispiel 1

45 g oxydiertes Polyethylen, $\overline{M}w$ ca. 23000, $\overline{M}n$ ca. 11.000, Säurezahl 10- 20, Verseifungszahl 25 bis 40 und Sauerstoffgehalt von 4,5 Gew.-% werden zu 8955 g Granulat aus Bisphenol-A-Homopolycarbonat der relativen Viskosität von 1,29, gemessen in Methylenchlorid bei 25°C, zugegeben. Das Ganze wird über einen Extruder bei 300°C zu einem Strang extrudiert und granuliert.

Beispiel 2

9 g oxydiertes Polyethylen, $\overline{M}w$ ca. 23000, $\overline{M}n$ ca. 11.000, Säurezahl 10- 20, Verseifungszahl 25 bis 40 und Sauerstoffgehalt von 4,5 Gew.-% werden zu 8991 g Granulat aus Bisphenol-A-Homopolycarbonat der relativen Viskosität 1,29, gemessen in Methylenchlorid bei 25°C, zugegeben. Das Ganze wird über einen Extruder bei 300°C zu einem Strang extrudiert und granuliert.

Vergleichsbeispiel 1

45 g Pentaerythrittetrastearat (PETS) werden zu 8955 g Bisphenol-A-Homopolycarbonat der relativen Viskosität von 1,29, gemessen in Methylenchlorid bei 25°C, zugegeben. Das Ganze wird über einen Extruder bei 300°C zu einem Strang extrudiert und granuliert.

Vergleichsbeispiel 2

45 g Hoechst-Wachs S® (Gemisch langkettiger, aliphatischer Carbonsäuren $C_{26}$ - $C_{32}$ COOH) werden zu 8955 g Bisphenol-A-Homopolycarbonat der relativen Viskosität von 1,29, gemessen in Methylenchlorid bei 25°C, zugegeben. Das Ganze wird über einen Extruder bei 300°C zu einem Strang extrudiert und granuliert.

Vergleichsbeispiel 3

Beispiel 1 wird wiederholt, wobei jedoch als oxydiertes Polyethylen ein solches mit einem $\overline{M}n$ von ca. 4.000 eingesetzt wird, und dessen Sauerstoffgehalt 6,5 Gew.-% beträgt.

In Tabelle 1 sind die Entformungskräfte aufgeführt, die beim Ausstoßen eines aus den jeweiligen Granulaten der Beispiele 1 und 2 bzw. des Vergleichsbeispiels gespritzten Zylinders mit 3,5 cm Länge und Durchmesser bei 4 mm Wanddicke benötigt werden. Tabelle 1 enthält außerdem die Kerbschlagzähigkeitswerte gemessen nach DIN 54 355 an Normkleinstäben (bei 270°C gespritzt).

4

EP 0 262 566 B1

T a b e l l e   1

|  | Gehalt an Entformungs- mittel (Gew.-%) | benötigte Ausstoß- kraft* | Kerb- schlag- zähigkeit $a_k$ |
|---|---|---|---|
| Beispiel 1 | 0,5 % | 25 bar | 37,2 kJ/m² |
| Beispiel 2 | 0,1 % | 30 bar | 55,7 " |
| Vergleichsbeispiel 1 | 0,5 % | 26 bar | 28,9 " |
| Vergleichsbeispiel 2 | 0,5 % | 30 bar | 30,6 " |
| Vergleichsbeispiel 3 | 0,5 % | 30 bar | 25,0 " |
| Basismaterial | 0 % | 62 bar | 51,5 " |

\* bei 100° C Werkzeugtemperatur

In Tabelle 2 ist der Einfluß der verschiedenen Entformungsmittelzusätze auf die thermische Langzeitstabilität von Polycarbonat festgehalten. Hierzu wurde eine Lang zeitalterung des jeweiligen Polycarbonatgranulats in 140° C heißer Luft vorgenommen. Zu Beginn der Prüfung und nach 2000 h Alterung wurde die relative Viskosität des Granulats in Methylenchlorid bei 25° C gemessen. Aus den Daten wird deutlich, daß oxidiertes Polyethylen überraschenderweise einen kaum meßbaren Einfluß auf den Molekulargewichtsabbau von Polycarbonat hat; dagegen bewirkt sowohl der Stearinsäureester des Pentaerythrits und erst recht die langkettige Carbonsäure (Hoechst-Wachs S®) im Vergleich zum Basismaterial eine deutliche höhere Abnahme des Molekulargewichts.

T a b e l l e   2

|  | $\eta_{rel}$* | |
|---|---|---|
|  | 0 h | 2000 h |
| Beispiel 1 | 1,291 | 1,282 |
| Beispiel 2 | 1,292 | 1,282 |
| Vergleichsbeispiel 1 | 1,294 | 1,263 |
| Vergleichsbeispiel 2 | 1,289 | 1,212 |
| Basismaterial | 1,292 | 1,284 |

\* gemessen in Methylenchlorid bei 25° C.

**Patentansprüche**

1. Verwendung von oxydiertem Polyethylen mit einem Molekulargewicht $\overline{M}n$ (Zahlenmittel, ermittelt durch Gelpermeationschromatographie) zwischen 9000 und 15 000 in Mengen von 0,05 bis 3 Gew.-%, bezogen jeweils auf Gesamtgewicht an Thermoplasten, als Entformungsmittel für estergruppenfreie, thermoplastische, aromatische Polycarbonate die gegebenenfalls noch andere Thermoplasten enthalten.

2.  Verwendung von oxydiertem Polyethylen gemäß Anspruch 1 in Mengen von 0,08 bis 1,0 Gew.-%.

3.  Verwendung von oxydiertem Polyethylen gemäß Anspruch 1 in Mengen von 0,1 bis 0,8 Gew.-%.

4.  Verwendung gemäß Anspruch 1, dadurch gekennzeichnet, daß die Polycarbonate als andere Thermoplasten thermoplastische Polyolefine, thermoplastische Polyalkylen terephthalate, thermoplastische ABS-Polymerisate oder themoplastische SAN-Polymerisate enthalten.

5.  Verwendung von oxydiertem Polyethylen mit einem $\overline{M}n$ zwischen 9000 und 14 000 gemäß Ansprüche 1 bis 4.

## Claims

1.  The use of oxidized polyethylene having a molecular weight $\overline{M}$ (number average, as determined by gel permeation chromatography) of 9,000 to 15,000 in quantities of 0.05 to 3% by weight, based on the total weight of thermoplastics, as mould release agents for thermoplastic aromatic polycarbonates free from ester groups and optionally containing other thermoplastics.

2.  The use of oxidized polyethylene as claimed in claim 1 in quantities of 0.08 to 1.0% by weight.

3.  The use of oxidized polyethylene as claimed in claim 1 in quantities of 0.1 to 0.8% by weight.

4.  The use claimed in claim 1, characterized in that the polycarbonates contain thermoplastic polyolefins, thermoplastic polyalkylene terephthalates, thermoplastic ABS polymers or thermoplastic SAN polymers as other thermoplastics.

5.  The use of oxidized polyethylene having an $\overline{M}$ of 9,000 to 14,000 as claimed in claims 1 to 4.

## Revendications

1.  Utilisation de polyéthylène oxydé ayant un poids moléculaire $\overline{M}n$ (moyenne en nombre, déterminé par chromatographie par perméation sur gel) entre 2000 et 15 000 en quantités de 0,05 à 3 % en poids, par rapport au poids total correspondant de matière thermoplastique, comme agent de démoulage pour polycarbonates aromatiques thermoplastiques dépourvus de groupes ester, qui contiennent le cas échéant encore d'autres matières thermoplastiques.

2.  Utilisation de polyéthylène oxydé suivant la revendication 1 en quantités de 0,08 à 1,0 % en poids.

3.  Utilisation de polyéthylène oxydé suivant la revendication 1 en quantités de 0,1 à 0,8 % en poids.

4.  Utilisation suivant la revendication 1, caractérisée en ce que les polycarbonates contiennent comme autres matières thermoplastiques, des polyoléfines thermoplastiques, des poly(téréphtalates d'alkylène)thermoplastiques, des polymérisats ABS thermoplastiques ou des polymérisats SAN thermoplastiques.

5.  Utilisation de polyéthylène oxydé ayant une valeur $\overline{M}n$ comprise entre 9000 et 14 000 suivant les revendications 1 à 4.